# EUROPEAN PATENT APPLICATION

(11) **EP 2 302 491 A2**
(43) Date of publication of application: **30.03.2011**
(21) Application number: 10152886.7
(22) Date of filing: 08.02.2010
(51) Int. Cl.: G06F 3/042

(54) **Optical touch system and method**

(30) Priority: 24.09.2009 TW 98132362; 17.11.2009 TW 98139011
(71) Applicant: Acer Incorporated, Taipei County (TW)
(72) Inventor: Dong-Hsing, Su, TAIPEI COUNTY (TW)
(74) Representative: Ilgart, Jean-Christophe

(57) **Abstract**

In an optical touch system and method, at least one optical reflector (181, 182, 183) and a plurality of image capturing modules (12, 14) are arranged on an outer periphery of a coordinate detection zone. Each of the image capturing modules has a corresponding first light-emitting module (161, 162). And, a second light-emitting module (163) is further provided on the outer periphery of the coordinate detection zone. The first light-emitting modules are controlled to emit light at a first time point while the image acquiring modules are controlled to capture a first image respectively; and the second light-emitting module is controlled to emit light at a second time point while one of the image capturing modules is controlled to capture at least one second image. The optical touch system computes coordinates of at least one object based on positions of the at least one object in each of the first and the at least one second image.

## Description

### FIELD OF THE INVENTION

The present invention relates to an optical touch system and method, and more particularly to an optical touch technology for controlling a plurality of light sources to emit light at different time points, and computing spatial coordinates of specific objects that are shown in captured images at the different time points.

### BACKGROUND OF THE INVENTION

With the constant progress of image display technology, the touch screen now advantageously allows a user to input data simply by touching the screen directly, and accordingly, becomes a widely available display device in the market. The touch screen is also widely applied to various kinds of electronic products, such as point of sale terminals, tourist guide systems, auto teller machines, and various industrial control systems. However, a touch screen employing optical lens detection technique would require a relatively large space to satisfy the requirement for screen touch detection because of the relatively large size of the conventional control mechanism thereof. With the conventional touch screen based on touch detection via optical lens, at least two image capturing modules are mounted on the display panel, and a plurality of infrared light sources is mounted on an outer periphery of the display panel, so that the image capturing modules capture infrared images above the surface of the display panel. When an object touches the surface of the display panel, the object would block the optical path via which the infrared rays emitted from the infrared light sources are projected to an optical reflector around the display panel. As a result, dark areas are produced on the optical reflector and captured by the image capturing modules. Then, by way of triangulation algorithm, virtual rays projected from the image acquiring modules to the touching object may be simulated. And, an intersection of the virtual rays indicates the position being touched by the object. Therefore, coordinates of the touch position may be computed in the above described manner.

However, when the surface of the display panel is touched by a plurality of objects, a plurality of virtual rays may be simulated from each of the image capturing modules. Under this condition, the number of intersections of the virtual rays is larger than the number of the objects, and it will be difficult to accurately determine the exact touch positions to often result in wrong touch position determination. For example, when there are two touch positions on the display panel, total four dark areas produced on the optical reflector may be simulated from two rays projected from each of two image capturing modules to the optical reflector. Therefore, there would be four ray intersections, and accordingly, two possible sets of touch positions. In other words, the possibility of wrong touch position determination is 50% under this situation. With the popularization of touch devices, the demands for multi-touch screens also increase rapidly. It is therefore desirable to work out a way to increase the accuracy of touch position determination for multi-touch input.

### SUMMARY OF THE INVENTION

In view of the aforementioned problems of the prior art, a first object of the present invention is to provide an optical touch system that enables increased accuracy of touch position determination for multi-touch input.

A second object of the present invention is to provide an optical touch method, with which touch positions on a multi-touch screen may be more accurately determined.

To achieve the first object, the optical touch system according to a preferred embodiment of the present invention comprises at least one optical reflector, a plurality of image capturing modules, a plurality of first light-emitting modules, a second light-emitting module, a control module, and a data computing module. The at least one optical reflector, the image acquiring modules, the first light-emitting modules, and the second light-emitting module are disposed on an outer periphery of a coordinate detection zone. The image capturing modules capture images formed by at least one object on the coordinate detection zone. The control module controls the first light-emitting modules to emit light at a first time point, and controls the image capturing modules to capture a first image at the first time point respectively. The control module also controls the second light-emitting module to emit light at a second time point, and controls at least one of the image capturing modules to capture at least one second image at the second time point. The data computing module computes a coordinate value of the at least one object on the coordinate detection zone according to positions of the at least one object in each of the first images and the at least one second image.

Preferably, the coordinate detection zone is a surface of a display screen.

When the number of the at least one object is greater than one, the data computing module computes a plurality of object coordinates sets based on positions of the plurality of objects in each of the plurality of first images, and then determines one of the plurality of object coordinates sets as the coordinates of the plurality of objects based on positions of the plurality of objects in the at least one second image.

Preferably, the data computing module computes a plurality of rays emitted from the plurality of image capturing modules based on the positions of the plurality of objects in each of the plurality of first images and positions of the plurality of image capturing modules on the coordinate detection zone, and the data computing module also computes coordinates of intersections among the plurality of rays and groups the coordinates of the intersections into the plurality of object coordinates candidate sets.

Preferably, the control module controls the second light-emitting module to turn off while controlling the plurality of first light-emitting modules to emit light at the first time point. The control module also controls the plurality of first light-emitting modules to turn off while controlling the second light-emitting module to emit light at the second time point.

To achieve the second object, the optical touch method according to the present invention comprises the following steps: (1) providing at least one optical reflector, a plurality of image capturing modules, a plurality of first light-emitting modules, and a second light-emitting module on an outer periphery of a coordinate detection zone; and using the plurality of image capturing modules to capture images formed by at least one object on the coordinate detection zone; (2) controlling the plurality of first light-emitting modules to emit light at a first time point, and controlling the plurality of image capturing modules to capture a first image at the first time point respectively; (3) controlling the second light-emitting module to emit light at a second time point, and controlling at least one of the plurality of image capturing modules to capture at least one second image at the second time point; and (4) computing coordinates of the at least one object on the coordinate detection zone based on positions of the at least one object in each of the plurality of first images and the at least one second image.

Preferably, the coordinate detection zone is a surface of a display screen.

When the number of the at least one object is greater than one, the optical touch method further comprises the following steps: computing a plurality of object coordinates sets based on positions of the plurality of objects in each of the plurality of first images, and then determining one of the plurality of object coordinates sets as the coordinates of the plurality of objects based on positions of the plurality of objects in the at least one second image.

Preferably, the optical touch method further comprises the following steps: computing a plurality of rays emitted from the plurality of image capturing modules based on the positions of the plurality of objects in each of the plurality of first images and positions of the plurality of image capturing modules on the coordinate detection zone; computing coordinates of intersections among the plurality of rays; and grouping the coordinates of the intersections into the plurality of object coordinates candidate sets.

Preferably, the optical touch method further comprises the step of controlling the second light-emitting module to turn off while controlling the plurality of first light-emitting modules to emit light at the first time point; and controlling the plurality of first light-emitting modules to turn off while controlling the second light-emitting module to emit light at the second time point.

With the above arrangements, the optical touch system and method according to the present invention provide the advantage of increased accuracy of touch position determination for multi-touch input.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein

Fig. 1 is a first schematic view of an optical touch system according to a preferred embodiment of the present invention;

Fig. 2 is a second schematic view of the optical touch system according to the preferred embodiment of the present invention;

Fig. 3 is a block diagram of the optical touch system according to the preferred embodiment of the present invention; and

Fig. 4 is a flowchart showing the steps included in an optical touch method according to the present invention.

### DETAILED DESCRIPTION OF THE PREFERRED EMBODIMENTS

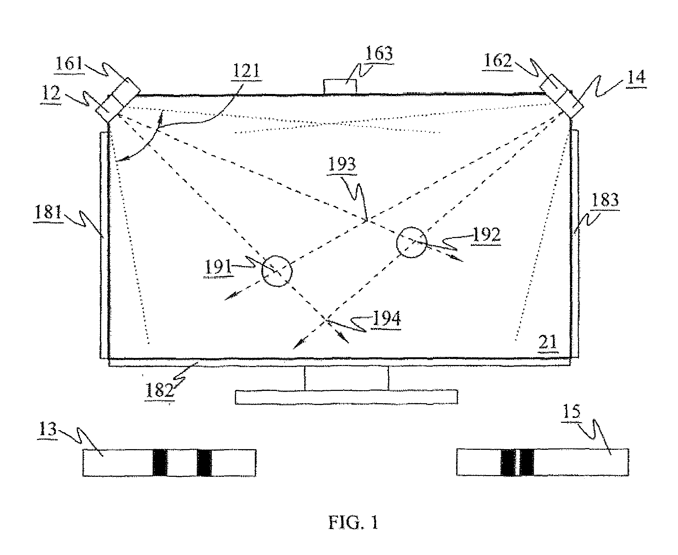

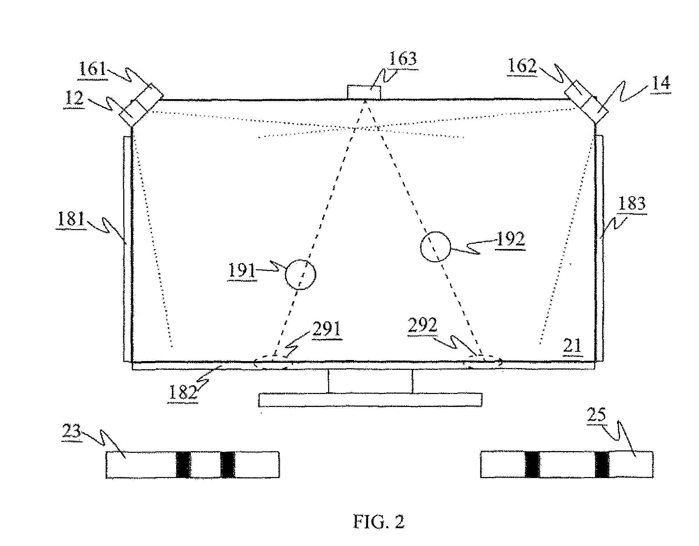

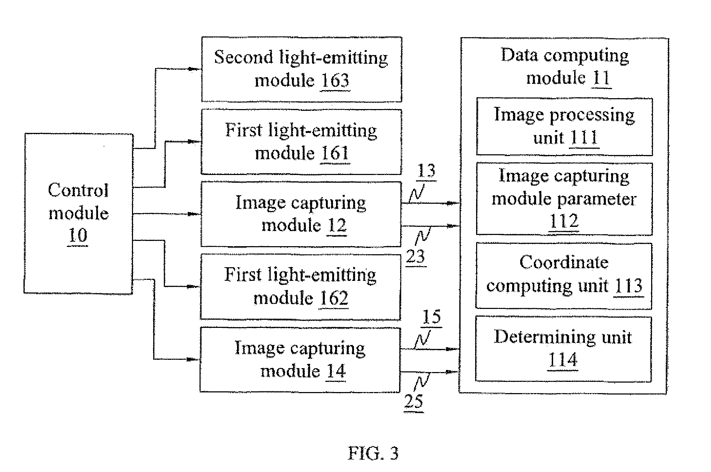

Please refer to Figs. 1 and 2 that are first and second schematic views, respectively, of an optical touch system according to a preferred embodiment; and to Fig. 3 that is a block diagram of the optical touch system according to the preferred embodiment of the present invention. As shown, the optical touch system of the present invention includes a control module 10; a data computing module 11; a plurality of image capturing modules 12, 14; a plurality of optical reflectors 181, 182, 183; a plurality of first light-emitting modules 161, 162; and a second light-emitting module 163. It is noted the control module 10 and the data computing module 11 are shown only in Fig. 3, and the optical reflectors 181∼183 are shown only in Figs. 1 and 2. In the illustrated embodiment, the optical touch system is provided on a display screen 21, and a surface of the display screen 21 is served as a coordinate detection zone. The image capturing modules 12, 14 are arranged on an outer periphery of the display screen 21 at an upper left and an upper right corner thereof, respectively, when viewing in front of the display screen 21. The image capturing modules 12, 14 are so disposed on the places where the capturing module 12, 14 may capture any image on the surface of the display screen 21. The optical reflectors 181∼183 are arranged at two lateral edges and a bottom edge of the display screen 21. Preferably, the optical reflector 181∼183 are made of a single-spectrum light-transmittable material, a light-mixing material, and a light-reflecting material. The first light-emitting modules 161, 162 are disposed at positions corresponding to the image acquiring modules 12, 14, such that light emitted from the first light-emitting modules 161, 162 is reflected by the optical reflectors 181∼183 to thereby project to the image capturing modules 12, 14. The second light-emitting module 163 is arranged at an upper edge of the display screen 21 to locate between the image capturing modules 12 and 14. Preferably, the first light-emitting modules 161, 162 or the second light-emitting module 163 emits an invisible light, such as an infrared ray; and the image capturing modules 12, 14 are able to capture invisible light images, such as infrared images.

The first light-emitting modules 161, 162 are controlled by the control module 10 to emit light at a first time point. At this point, the image capturing modules 12, 14 are able to capture images that have different brightness from the background. When the surface of the display screen 21 is touched by an object, the object would block optical paths of lights emitted from the first light-emitting modules 161, 162 to the optical reflectors 181∼183, and the image capturing modules 12, 14 would capture dark areas formed by the object in the first images 13, 15. For example, when the display screen 21 is touched by two objects so that two touch positions 191, 192 are produced on the display screen 21, there are two dark areas shown in the content of each of the first images 13, 15. However, it is noted that, when the coordinate detection zone is touched by a plurality of objects, there are chances the number of the dark areas in the images captured by the image capturing modules is smaller than the number of the objects touching the coordinate detection zone due to the angle of capturing image, such as in the case the plurality of objects and the image capturing modules are collinear.

The data computing module 11 further includes an image processing unit 111, a set of image capturing module parameters 112, a coordinate computing unit 113, and a determining unit 114. When the first image 13, 15 are received by the data computing module 11, the image processing unit 111 first analyzes the positions of the dark areas in the first images 13, 15. The image capturing module parameters 112 include at least a view angle parameter of the image capturing modules 12, 14, and the position and resolution of the image capturing modules on the coordinate detection zone. Since the first images 13, 15 are optical signals which are able to be received by the image capturing module 12, 14 respectively within a view angle 121; it is able to derive the positions of the objects blocking the optical paths relative to the image capturing modules 12, 14 based on the positions of the dark areas in the first images 13, 15. Since the dark areas are formed when the optical paths are blocked by the objects, the coordinate computing unit 113 is able to compute the rays projected to the objects blocking the optical paths based on the positions of the dark areas and the image capturing module parameters 112. That is, the coordinate computing unit 113 is able to determine on which rays the objects are located. Since the same one object will produce a dark area on each of the first images captured by different image capturing modules 12, 14, the coordinate computing unit 113 may obtain the coordinates of the object by calculating an intersection of the rays projected from the image capturing modules 12, 14 to the object. Since the above-described way of computing the coordinates of the object is the triangulation algorithm known by one having ordinary skill in the art, it is not described in details herein.

When the display screen 21 is touched by a plurality of objects at the same time, such as two objects as shown in Fig. 1, there are two dark areas formed in the first images 13 and 15. The data computing module 11 computes two rays that are projected from each of the image capturing modules 12 and 14 respectively, and then, the data computing module 11 computes intersections of the four rays. However, there are four intersections 191∼194 among the four rays. And accordingly, there are two object coordinates sets. The ray intersections 191, 192 provide the first object coordinates set; and the ray intersections 193, 194 provide the second object coordinates set. At this point, the second light-emitting module 163 is controlled by the control module 10 to emit light at a second time point and the first light-emitting modules 161, 162 is also controlled by the control module to stop emitting light at the same time. Then, the control module 10 controls the image capturing modules 12 or the image capturing module 14 to capture a second image 23 or 25. Please refer to Fig. 2. When only the second light-emitting module 163 is controlled to emit light, two shadows of the two objects are formed on the optical reflector 182 at positions 291, 292 as indicated in Fig. 2. Therefore, there are two dark areas in the second images 23 or 25 captured by the image capturing modules 12 or 14 respectively.

The determining unit 114 of the data computing module 11 is able to determine which of the two object coordinates sets is to be selected according to the positions of the dark areas in any one of the second image 23, 25. Please refer to Figs. 1 and 2 at the same time. Suppose that the ray intersections 193, 194 are the touch positions, then the two shadows on the optical reflector 182 should be relatively close to each other in position, which is, however, not consistent with the positions of the dark areas in the second images 23 or 25. Therefore, the data computing module 11 determines the object coordinates set at the ray intersections 191, 192 as the correct touch positions. In the present invention, the image processing unit 111, the coordinate computing unit 113, and the determining unit 114 are preferably implemented in the form of software, such as related programs executed by a processor.

While the optical touch system of the present invention employs the architecture of a conventional dual-image acquiring module, it further adds the second light-emitting module 162 and the determining unit 114 of the data computing module 11 to the conventional architecture, so that the optical touch system of the present invention provides increased accuracy of touch position determination for multi-touch devices.

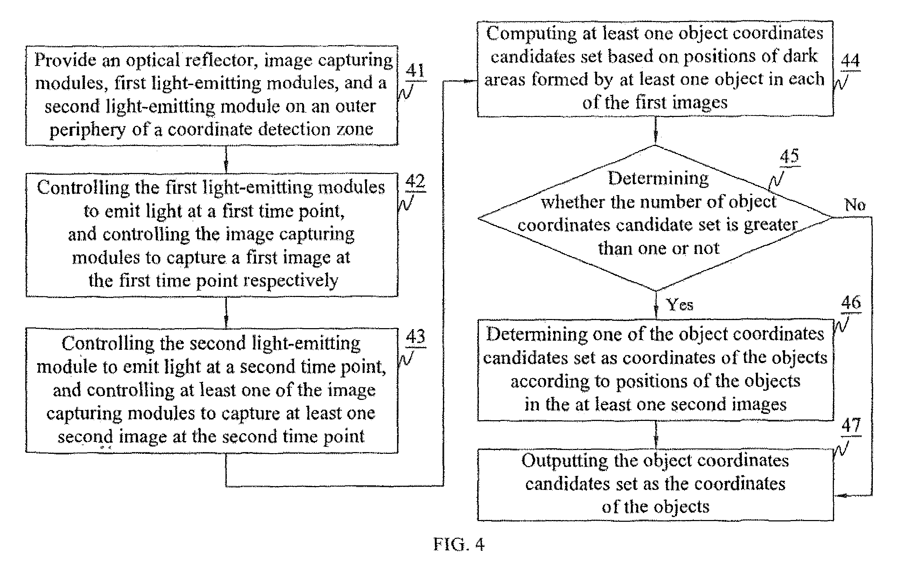

Please refer to Fig. 4, which is a flowchart showing the steps included in an optical touch method according to the present invention. As shown, in a first step 41, at least one optical reflector, a plurality of image acquiring modules, a plurality of first light-emitting modules, and a second light-emitting module are provided on an outer periphery of a coordinate detection zone. Preferably, the coordinate detection zone is a surface of a display screen, and the image capturing modules are separately arranged at two adjacent corners of the display screen, such as an upper left and an upper right corner. The at least one optical reflector is arranged at one edge of the display screen. For example, three optical reflectors may be arranged at two lateral edges and a bottom edge of the display screen. Preferably, the optical reflector is selected from the group consisting of a single-spectrum light-transmittable material, a light-mixing material, and a light-reflecting material. Alternatively, an integrally formed optical reflector is provided to cover the two lateral edges and the bottom edge of the display screen. And, the first light-emitting modules and the second light-emitting module are preferably provided to emit invisible light, such as infrared rays, and the image capturing modules are able to capture images, such as invisible light images, formed on the coordinate detection zone due to touch by the at least one object.

In a second step 42, the first light-emitting modules are controlled to emit light at a first time point, and the image capturing modules are controlled to capture a first image respectively at the first time point. Meanwhile, the second light-emitting module is controlled to stop emitting light at the first time point, so as to avoid any adverse influence on the number and the positions of dark areas formed in the first images. In a third step 43, the second light-emitting module is controlled to emit light at a second time point and at least one of the image capturing modules is controlled to capture at least one second image at the second time point. Meanwhile, the first light-emitting modules are controlled to stop emitting light at the second time point, so as to avoid any adverse influence on the number and the positions of dark areas formed in the at least one second image.

In a fourth step 44, at least one object coordinates candidate set is computed based on the positions of dark areas formed by the at least one object in the first images. In the present invention, the positions of the dark areas formed by the at least one object in the first images are obtained through an image processing conducted on the first images. In a fifth step 45, it is determined whether there is more than one object coordinates candidate set. If yes, a sixth step 46 is executed; or if no, a seventh step 47 is executed. In the seventh step 47, the object coordinates candidate set is output as the coordinates of the object.

When there is more than one object coordinates candidate set, in the sixth step 46, according to the positions of the dark areas formed by the objects in the at least one second images, one of the multiple object coordinates candidate sets is determined as the coordinates of the objects. And then, the determined coordinates of the objects are output. It is noted the first time point and the second time point mentioned in the second step 42 and the third step 43 are intended only to explain that the first images and the at least one second image are captured at different time points, and not to limit the sequential order of acquiring the first and the second images. In other words, the step 43 can be otherwise executed first and the step 42 may be executed after the step 43.

The present invention has been described with some preferred embodiments thereof and it is understood that many changes and modifications in the described embodiments can be carried out without departing from the scope and the spirit of the invention that is intended to be limited only by the appended claims.

## Claims

1. An optical touch system, comprising:
a plurality of first light-emitting modules (161,162) being disposed on an outer periphery of a coordinate detection zone;
a second light-emitting module (163) being disposed on the outer periphery of the coordinate detection zone;
a plurality of image capturing modules (12,14) being arranged for capturing images formed by at least one object on the coordinate detection zone;
at least one optical reflector (181,182,183) being disposed on the outer periphery of the coordinate detection zone for reflecting light emitted from the plurality of first light-emitting modules (161,162) and the second light-emitting module (163) to the plurality of image capturing modules (12,14);
a control module (10) being arranged for controlling the plurality of first light-emitting modules (161,162) to emit light at a first time point, and controlling the plurality of image capturing modules (12,14) to capture a first image (13,15) at the first time point respectively, and the control module (10) being arranged for controlling the second light-emitting module (163) to emit light at a second time point, and controlling at least one of the plurality of image capturing modules (12 or 14) to capture at least one second image (23 or 25) at the second time point respectively; and
a data computing module (11) be arranged for computing coordinate of the at least one object on the coordinate detection zone according to positions of the at least one object in each of the plurality of first images (13,15) and in the at least one second image (23 or 25).

2. The optical touch system as claimed in claim 1, wherein the coordinate detection zone is a surface of a display screen (21), and the at least one optical reflector being disposed on edges of the display screen (21), and the plurality of image capturing modules (12,14) be disposed at corners of the display screen (21) respectively.

3. The optical touch system as claimed in claim 2, wherein the second light-emitting module (163) is disposed on the edge of the display screen (21) and between the plurality of image capturing modules (12,14).

4. The optical touch system as claimed in claim 1, wherein, when the number of the at least one object is greater than one, the data computing module (11) computing a plurality of object coordinates candidate sets based on the positions of the plurality of objects in each of the plurality of first images (13,15), and then determining one of the plurality of object coordinate candidate sets as the coordinates of the plurality of objects based on the positions of the plurality of objects in the at least one second image (23 or 25).

5. The optical touch system as claimed in claim 4, wherein the data computing module (11) computes a plurality of rays emitted from the plurality image capturing modules (12,14) based on the positions of the plurality of objects in each of the plurality of first images (13,15) and the positions of the plurality of image capturing modules (12,14) on the coordinate detection zone, and computing coordinates of intersections (191,192,193,194) among the plurality of the rays and grouping the coordinates of the intersections (191,192,193,194) into the plurality of object coordinates sets.

6. The optical touch system as claimed in claim 1, wherein the control module controls the second light-emitting module to turn off while controlling the plurality of first light-emitting modules to emit light at the first time point.

7. The optical touch system as claimed in claim 1, wherein the control module (10) controls the plurality of first light-emitting modules (161,162) to turn off while controlling the second light-emitting module (163) to emit light at the second time point.

8. An optical touch method, comprising the following steps of:
providing at least one optical reflector (181,182,183), a plurality of image capturing modules (12,14), a plurality of first light-emitting modules (161,162), and a second light-emitting module (163) on an outer periphery of a coordinate detection zone, and the plurality of image capturing modules being arranged for capturing images formed by at least one object on the coordinate detection zone;
controlling the plurality of first light-emitting modules to emit light at a first time point, and controlling the plurality of image capturing modules to capture a first image each at the first time point respectively;
controlling the second light-emitting module (163) to emit light at a second time point, and controlling at least one of the plurality of the image capturing modules (12 or 14) to capture at least one second image (23 or 25) at the second time point; and
computing a coordinate value of the at least one object on the coordinate detection zone based on positions of the at least one object in each of the plurality of first images (13,15) and in the at least one second image (23 or 25).

9. The optical touch method as claimed in claim 8, wherein the coordinate detection zone is a surface of a display screen (21), and the at least one optical reflector (181,182,183) being disposed on edges of the display screen (21), and the plurality of image capturing modules (12,14) being disposed at corners of the display screen (21) respectively.

10. The optical touch method as claimed in claim 9, wherein the second light-emitting module (163) is disposed on the edge of the display screen (21) and between the plurality of image capturing modules (161,162).

11. The optical touch method as claimed in claim 8, further comprising the following steps of when the number of the at least one object is greater than one:
computing a plurality of object coordinates candidate sets based on the positions of the plurality of objects in each of the plurality of first images (13,15); and
determining one of the plurality of object coordinates candidate sets as coordinates of the plurality of objects according to the positions of the plurality objects in the at least one second image (23 or 25).

12. The optical touch method as claimed in claim 11, further comprising the following steps of:
computing a plurality of rays emitted from the plurality of image capturing modules (12,14) based on the positions of the plurality of objects in each of the plurality of first images (13,15) and the positions of the plurality of image capturing modules (12,14) on the coordinate detection zone;
computing coordinates of intersections (191,192,193,194) among the plurality of rays; and
grouping the coordinates of the intersections (191,192,193,194) into the plurality of object coordinates sets.

13. The optical touch method as claimed in claim 8, further comprising the step of:
controlling the second light-emitting module (163) to turn off while controlling the plurality of first light-emitting modules (161,162) to emit light at the first time point.

14. The optical touch method as claimed in claim 8, further comprising the step of:
controlling the plurality of first light-emitting modules (161,162) to turn off while controlling the second light-emitting module (163) to emit light at the second time point.
